# EUROPÄISCHE PATENTSCHRIFT

(11) **EP 0 617 884 B1**
(45) Veröffentlichungstag und Bekanntmachung des Hinweises auf die Patenterteilung: **24.06.1998**
(21) Anmeldenummer: 94104711.0
(22) Anmeldetag: 24.03.1994
(51) Int. Cl.: A01F 12/10

(54) **Einlaufblech eines Axialabscheiders**
Sheet-metal inlet from an axial separator
Tôle d'entrée d'un séparateur axial

(30) Priorität: 31.03.1993 US 41074
(43) Veröffentlichungstag der Anmeldung: 05.10.1994
(73) Patentinhaber: DEERE & COMPANY, Moline, Illinois 61265 (US)
(72) Erfinder: Gerber, Merle Ray, Moline, Illinois 61265 (US)
(74) Vertreter: Feldmann, Bernhard

(56) Entgegenhaltungen:
- GB-A- 2 163 635
- US-A- 4 291 709
- US-A- 4 665 929
- US-A- 4 900 290

## Beschreibung

Die Erfindung betrifft ein Einlaufblech eines Axialabscheiders bestehend aus einem bezogen auf die Querrichtung stromaufwärts gelegenen Bereich mit einer Platte und einem bezogen auf die Querrichtung stromabwärts gelegenen Bereich mit einer Rampe, wobei die Rampe steiler verläuft als die Platte, und einen Axialabscheider.

Die US-A-4,665,929 offenbart einen Mähdrescher mit einer Axialabscheidevorrichtung, die einen Rotor mit einer an dessen vorderen Ende vorgesehenen Einzugsschneckenwindung enthält. Dem Axialabscheider ist eine quer verlaufende Zuführtrommel vorgeschaltet, die Erntematerial von einem Schrägförderer annimmt und es dem Dreschteil des Axialabscheiders zufördert. Stromabwärts folgt auf die Zuführtrommel ein assymmetrisches Einlaufblech mit zwei Abschnitten, von denen der stromaufwärts gelegene flacher verläuft als der stromabwärts gelegene.

Mit einer derartigen Form eines Einlaufblechs ist nur bedingt eine gleichmäßige Zufuhr von Erntegut in den Spalt zwischen Rotor und Rotorgehäuse möglich.

Die der Erfindung zugrunde liegende Aufgabe wird darin gesehen, ein Einlaufblech zu gestalten, das eine gleichmäßige Gutzufuhr erbringt.

Diese Aufgabe wird erfindungsgemäß durch die Lehre des Patentanspruchs 1 bzw. 2 gelöst, wobei in den weiteren Patentansprüchen die Lösung in vorteilhafter Weise weiterentwickelnde Merkmale aufgeführt sind.

Auf diese Weise wird durch den konisch verlaufenden Abschnitt das Erntegut bereits gedreht und in eine Rollbewegung versetzt, was zu einer ausgezeichneten Gutannahme durch den Rotor führt.

Nach einer anderen Lösung werden die beiden sich aus der unterschiedlichen Neigung der Platte bzw. der Rampe ergebenden Teilströme von einem Rand getrennt gehalten. Auf diese Weise findet keine erneute Vermischung der beiden Teilströme und somit ebenfalls eine einwandfreie Zufuhr statt. "Bezogen auf die Querrichtung" bedeutet "quer zur Längsachse des Rotors".

Eine optimale Zufuhr ist auch unter widrigsten Umständen bei Anwendung beider Merkmale gegeben.

Verläuft die Rampe gekrümmt, z. B. auf einer Bogenlinie, folgt das Erntegut aufgrund der von der Trommel aufgegebenen Energie einem vorgegebenen Pfad und hat keine Möglichkeit, auseinander zu fallen, was eine gezielte Förderung erschweren würde.

Die Verwendung konvergierender Seitenplatten in Verbindung mit der Platte und/oder der Rampe verhindert einen Absatz in dem Förderpfad und sorgt somit für eine glatte Bewegung des Ernteguts von den Außenseiten zu dem schmaleren Rotor.

Mittels einer schrägen, auf die Rampe folgenden weiteren Rampe wird ebenfalls die Zufuhr zur Rotorangriffsfläche allmählich, d. h. ohne Absätze, gestaltet. Ist diese Rampe zusätzlich halbzylindrisch, d. h. in der Art einer Hohlschale ausgebildet, findet dadurch ebenfalls eine Einleitung der Rollbewegung des Ernteguts - nunmehr aber auf der anderen Seite - statt.

Unter den vielfältigen Anwendungen eines derartigen Einlaufblechs ist die bei einem Mähdrescher mit einem Axialabscheider gewählte besonders vorteilhaft, weil dort das zugeführte Material sehr heterogen ist und somit einer optimalen Gutführung bedarf.

Eine Gutführung wird um so sicherer stattfinden, wenn die Bewegungsenergie besonders hoch ist; diese kann mittels einer dem Axialabscheider vorgeschalteten Trommel erzeugt werden.

In der Zeichnung ist ein nachfolgend näher beschriebenes Ausführungsbeispiel der Erfindung dargestellt. Es zeigt:
- Fig. 1: einen Mähdrescher in schematischer Darstellung und in Seitenansicht mit einem erfindungsgemäßen Einlaufblech,
- Fig. 2: eine perspektivische Ansicht eines Zufuhrbereichs eines Axialabscheiders,
- Fig. 3: den Zufuhrbereich in Draufsicht,
- Fig. 4: den Zufuhrbereich in Vorderansicht,
- Fig. 5: den Zufuhrbereich in Seitenansicht in Blickrichtung der Pfeile 5 in Figur 4 und
- Fig. 6: den Zufuhrbereich im Schnitt in Blickrichtung der Pfeile 6 in Figur 4.

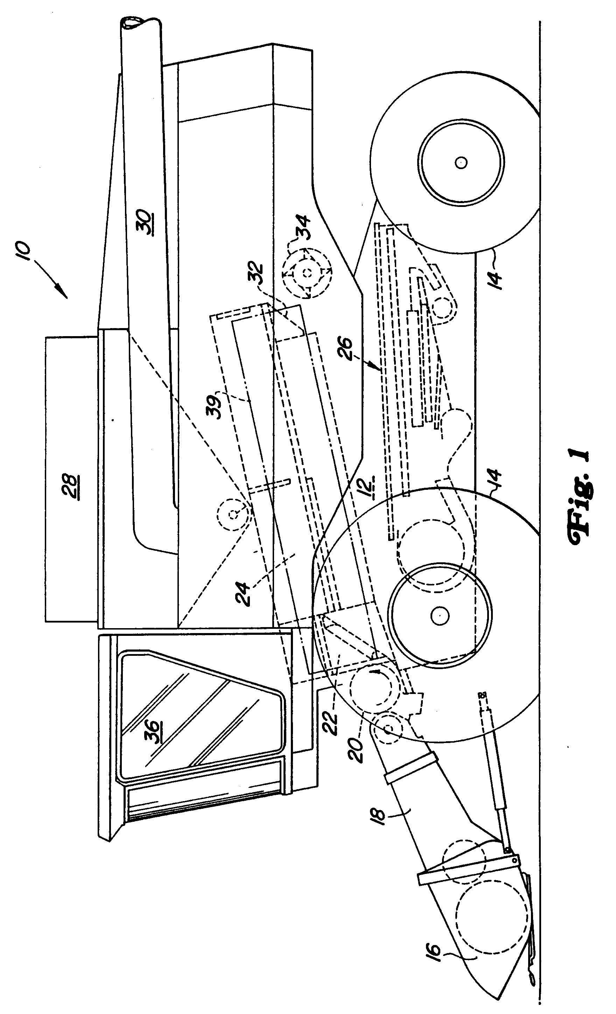

Figur 1 zeigt einen Mähdrescher 10 mit einem Fahrgestell 12, das sich über Laufräder 14 auf dem Boden abstützt. Eine Erntebergungsvorrichtung 16 befindet sich an der Mähdreschervorderseite und dient dazu, Erntegut vom Boden aufzunehmen und es über einen Schrägförderer 18 einer Trommel 20 zuzuführen. Die Trommel 20 überführt das Erntegut über einen Zufuhrbereich 22 nach oben zu einem Axialabscheider 24.

Der Axialabscheider 24 drischt das Erntegut und trennt es in verschiedene Bestandteile. Das Korngut - Getreide - und die Spreu fallen durch einen Rost an der Unterseite des Axialabscheiders 24 einem Reinigungssystem 26 zu. Das Reinigungssystem 26 entfernt die Spreu und gibt das gereinigte Korngut einem nicht gezeigten Körnerelevator auf. Der Körnerelevator liefert das Korngut in einen Korntank 28, aus dem es mittels eines Entleerrohrs 30 in einen Anhänger oder dergleichen entladen werden kann.

Gedroschenes und abgeschiedenens Stroh wird aus dem Axialabscheider 24 durch einen Auslaß 32 zu einer Trommel 34 geführt. Die Trommel 34 selbst schleudert das Stroh aus dem rückwärtigen Ende des Mähdreschers 10. Die Bedienung des Mähdreschers 10 erfolgt von einer Fahrerkabine 36 aus.

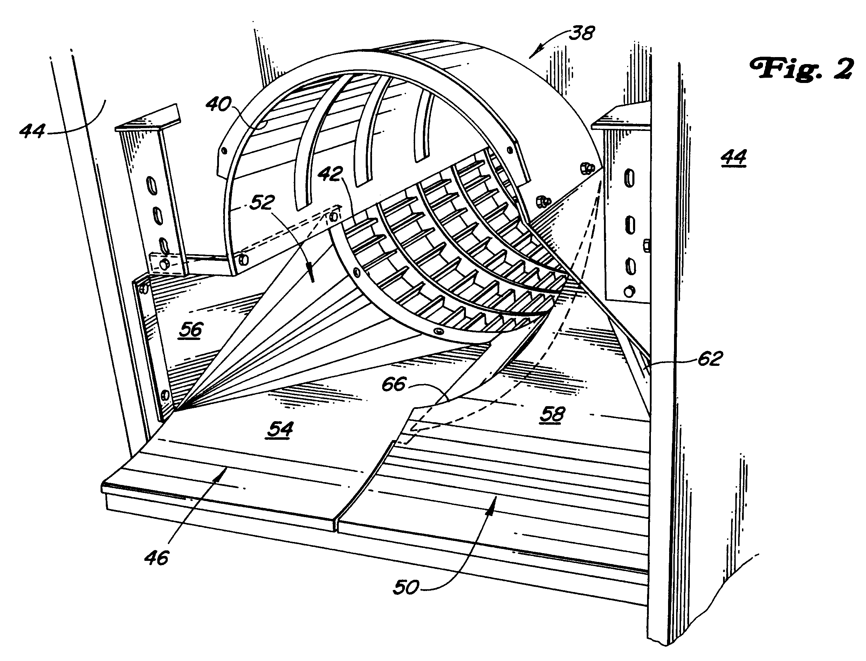

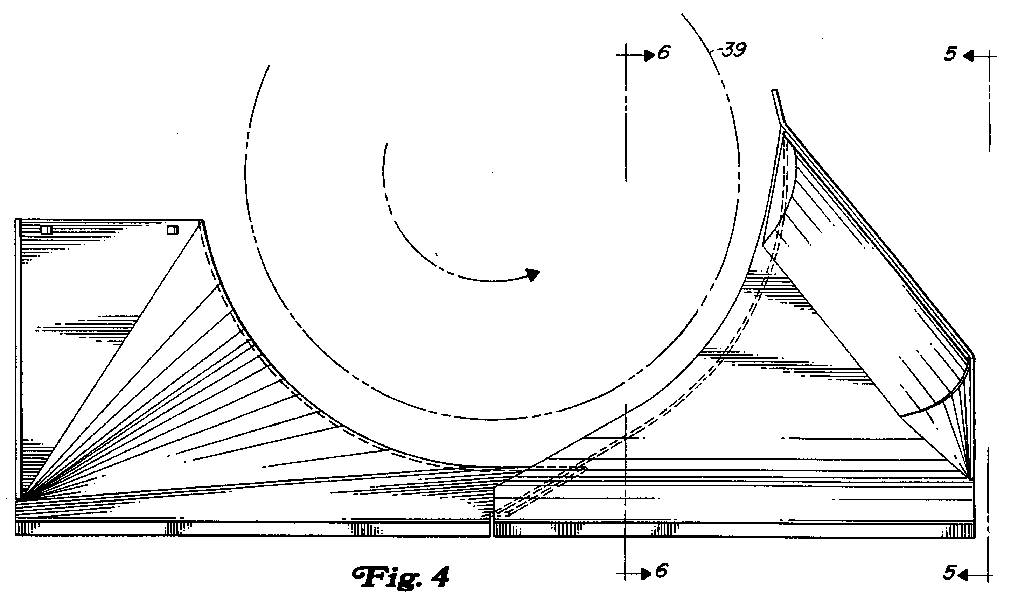

Der Axialabscheider 24 enthält ein zylindrisches Rotorgehäuse 38 und einen innerhalb von diesem angeordneten Rotor 39. Der Rotor 39 dreht mit Blick auf Figur 4 entgegen dem Uhrzeigerdrehsinn, was der Sichtweise eines vor dem Mähdrescher 10 stehenden und zu dessen rückwärtigen Ende schauenden Betrachters entspricht. In einem Ausführungsbeispiel, in dem der Rotor 39 in die andere Richtung dreht, wäre die Ausbildung bzw. die Anordnung in dem Zufuhrbereich 22 spiegelbildlich hierzu auszugestalten. Das Rotorgehäuse 38 weist einen oberen Abschnitt 40 und einen unteren Abschnitt 42 auf. Der untere Abschnitt 42 enthält einen Rost, durch den das Korngut und die Spreu zu dem Reinigungssystem 26 fallen. Wie es aus Figur 2 hervorgeht, sind das Rotorgehäuse 38 und der Zufuhrbereich 22 zwischen Seitenwänden 44 des Mähdreschers 10 angeordnet, die zugleich einen Teil dessen Fahrgestells 12 bilden.

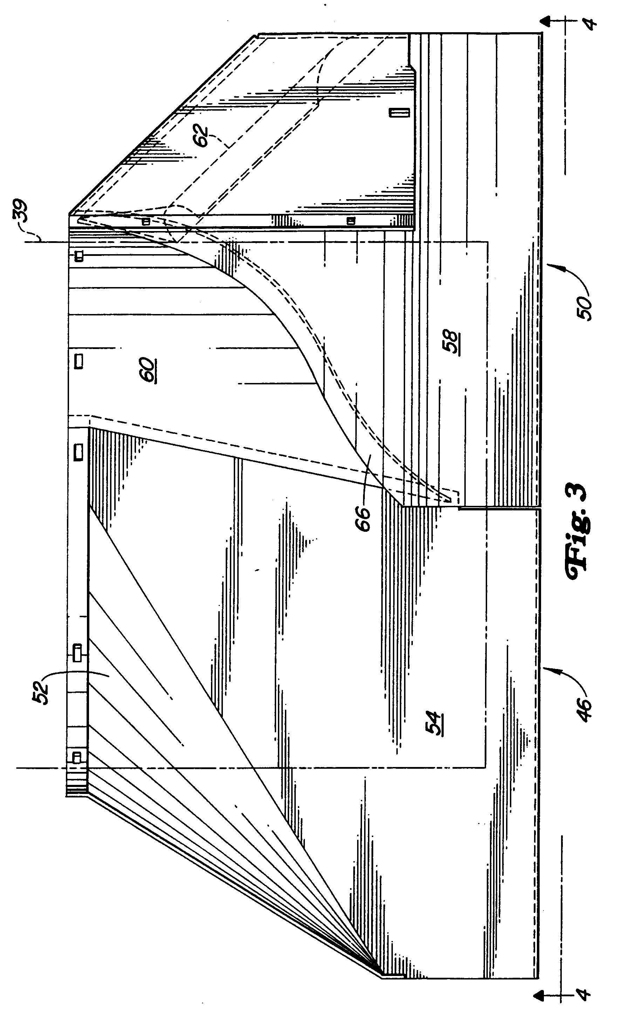

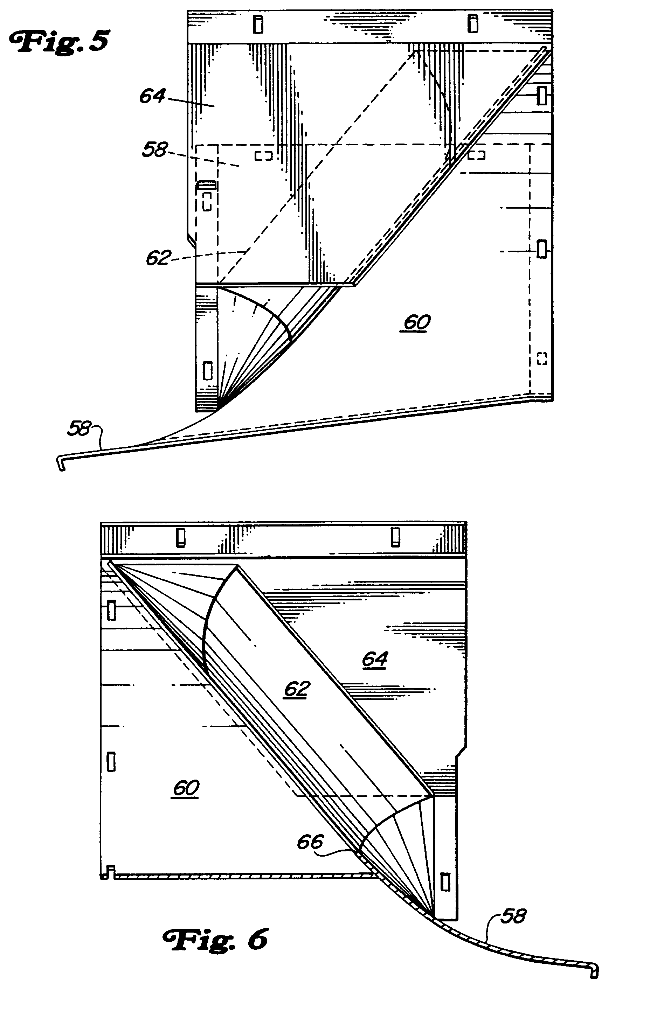

Der Zufuhrbereich 22 ist am besten in den Figuren 2 bis 6 dargestellt. Der vordere Teil des Rotors 39 erstreckt sich bis in den Zufuhrbereich 22. Der Zufuhrbereich 22 weist ein Einlaufblech mit zwei Bereichen auf: einem querverlaufenden stromaufwärts gelegenen Bereich 46 und einem querverlaufenden stromabwärts gelegenen Bereich 50. Der querverlaufende stromaufwärts gelegene Bereich 46 ist in seinem dem Rotor 39 zugelegenen Endbereich mit einem konisch nach oben und innen verlaufenden Abschnitt 52 versehen, der das Rollen oder Ringeln einer dünnen Erntegutmatte einleitet und das Erntegut auf der ihm zugelegenen Seite des Einlaufblechs dem unteren Abschnitt 42 des Rotorgehäuses 38 und des Rotors 39 zuführt. Die von der Trommel 20 auf dem querverlaufenden stromaufwärts gelegenen Bereich 46 zugeführte Erntegutmatte gleitet auf einer geneigten Platte 54, bis sie auf den konischen Abschnitt 52 trifft. Die geneigte Platte 54 erstreckt sich von der quer verlaufenden Trommel 20 zu dem konischen Abschnitt 52. Eine dreiecksförmige, zusammenlaufende, d. h. zu dem Rotor 39 konvergierende Seitenplatte 56 und eine nicht näher bezeichnete, horizontal verlaufende dreiecksförmige Deckplatte zwingen den Erntegutstrom weiter zu dem Rotor 39.

Der querverlaufende stromabwärts gelegene Bereich 50 ist mit einer bogenförmigen Rampe 58 versehen, die nach oben zu dem Rotor 39 hin gekrümmt ist. Der Verlauf der bogenförmigen, gekrümmten Rampe 58 ist steiler als der der geneigten Platte 54. Unmittelbar hinter und unter der gekrümmten Rampe 58 befindet sich eine halbzylindrische Führungsplatte 60, die einen beträchtlichen Teil des Rotorgehäuses 38 ausmacht. Die Erntegutmatte wird weiterhin von einer schräg verlaufenden, gekrümmten Rampe oder Gleitfläche 62 in ihren Lauf gezwungen, die zwischen die bogenförmige Rampe 58 und eine ebene Seitenplatte 64 montiert ist. Erntegut, das entlang der äußeren Kante der bogenförmigen Rampe 58 bewegt wird, wird von der Trommel 20 die Rampe 58 hinauf geworfen und kommt in Eingriff mit der schräg verlaufenden, gekrümmten Rampe 62, die das Erntegut schließlich auf die Oberseite des Rotors 39 wirft.

Die bogenförmige Rampe 58 ist mit einem sich nach oben erstreckenden und teilweise über die halbzylindrische Führungsplatte 60 reichenden Rand 66 oder Schulter versehen, der eine flache Tot-Zone hinter der Rampe 58 bildet. Erntegut, das in diese Zone gelangt und dort festgehalten wird, gleitet die halbzylindrische Führungsplatte 60 hinauf und wird so zu dem Rotor 39 gefördert. Der Rand 66 hindert Erntegut in dem stromaufwärts gelegenen Bereich 46 auch daran, sich mit dem Teilstrom des Ernteguts des stromabwärts gelegenen Bereichs 50 zu vermischen.

Zusätzlich zu der Bildung der flachen Tot-Zone hinter dem Rand 66 begrenzt der Rand 66 auch wesentlich die Bewegung des von der Trommel 20 geförderten Ernteguts, von dem in Querrichtung stromaufwärts gelegenen zu dem stromabwärts gelegenen Bereich 46, 50.

Das vorbeschriebene Ausführungsbeispiel liefert ein assymmetrisches Einlaufblech, das eine störungsfreie Zufuhr von Erntegut zu dem Rotor 39 bewirkt.

Das Einlaufblech unterteilt den zugeführten Erntegutstrom im wesentlichen in drei Teilströme, die an jeweils unterschiedlichen Stellen von dem Rotor 39 mitgenommen werden und somit eine gleichmäßige Beschickung garantieren. Zunächst wird der äußere Teilstrom auf der mit Blick auf die Figuren 2 bis 4 linken Seite über den konischen Abschnitt 52 und die daran angrenzende Seitenwand 56 der Unterseite des Rotors 39 zugeführt. Der Teil der Erntegutmatte in der Mitte des Einlaufblechs gleitet auf der halbzylindrischen Führungsplatte 60 zu einem Seitenbereich des Rotors 39. Das dem stromabwärts gelegenen Bereich 50 zukommende Erntegut verläuft über die bogenförmige, gekrümmte Rampe 58 und die schräg verlaufende Rampe 62 zu der Oberseite des Rotors 39. Auf diese Weise ergibt sich eine gleichmäßige Erntegutzufuhr in den Abscheidebereich des Rotors 39.

Die vorliegende Erfindung liefert ein passives System zur wirksamen Einführung einer dünnen Erntegutmatte in einen Axialabscheider 24.

## Patentansprüche

1. Einlaufblech eines Axialabscheiders bestehend aus einem bezogen auf die Querrichtung stromaufwärts gelegenen Bereich (46) mit einer Platte (54) und einem bezogen auf die Querrichtug stromabwärts gelegenen Bereich (50) mit einer Rampe (58), wobei die Rampe (58) steiler verläuft als die Platte (54), dadurch gekennzeichnet, daß sich in dem stromaufwärts gelegenen Bereich (46) an die geneigte Platte (54) in Flußrichtung ein konisch verlaufender Abschnitt (52) anschließt, dessen Neigung geringer ist als die der Rampe (58).

2. Einlaufblech eines Axialabscheiders bestehend aus einem bezogen auf die Querrichtung stromaufwärts gelegenen Bereich (46) mit einer Platte (54) und einem bezogen auf die Querrichtung stromabwärts gelegenen Bereich (50) mit einer Rampe (58), wobei die Rampe (58) steiler verläuft als die Platte (54), dadurch gekennzeichnet, daß in dem stromabwärts gelegenen Bereich (50) die Rampe (58) in einem Rand (66) ausläuft, der teilweise eine auf die Rampe (58) in Flußrichtung folgende Führungsplatte (60) überragt.

3. Einlaufblech nach Anspruch 1 und 2.

4. Einlaufblech nach einem oder mehreren der vorherigen Ansprüche, dadurch gekennzeichnet, daß die Rampe (58) gekrümmt verläuft.

5. Einlaufblech nach einem oder mehreren der vorherigen Ansprüche, dadurch gekennzeichnet, daß die Rampe (58) mit einer konvergierenden Seitenplatte (64) versehen oder an diese angeschlossen ist.

6. Einlaufblech nach Anspruch 5, dadurch gekennzeichnet, daß sich zwischen der Seitenplatte (64) und der Rampe (58) eine schräg verlaufende Rampe (62) erstreckt.

7. Einlaufblech nach Anspruch 6, dadurch gekennzeichnet, daß die schräg verlaufende Rampe (62) halbzylindrisch ausgebildet ist.

8. Einlaufblech nach einem oder mehreren der vorherigen Ansprüche, dadurch gekennzeichnet, daß der stromaufwärts gelegene Bereich (46) mit einer konvergierenden Seitenplatte (56) versehen ist.

9. Axialabscheider mit einem Rotorgehäuse (38) und einem in diesem drehbar gelagerten Rotor (39) zur Abscheidung von Erntegut in einem Mähdrescher, gekennzeichnet durch ein im Einzugsbereich des Rotors (39) gelegenes Einlaufblech nach einem oder mehreren der Ansprüche 1 bis 8.

10. Axialabscheider nach Anspruch 9, dadurch gekennzeichnet, daß dem Einlaufblech eine sich quer zur Flußrichtung erstreckende, fördernde Trommel (20) vorgelagert ist.

## Claims

1. An infeed plate of an axial separator consisting of a region (46), with a plate (54), disposed upstream relative to the transverse direction and a region (50), with a ramp (58), disposed downstream relative to the transverse direction, wherein the ramp (58) runs more steeply than the plate (54), characterized in that a conically extending section (52), whose inclination is smaller than that of the ramp (58), adjoins the inclined plate (54) in the direction of flow in the region (46) lying upstream.

2. An infeed plate of an axial separator consisting of a region (46), with a plate (54), disposed upstream relative to the transverse direction and a region (50), with a ramp (58), disposed downstream relative to the transverse direction, wherein the ramp (58) runs more steeply that the plate (54), characterized in that the ramp (58) in the region (50) lying downstream ends in a rim (66) which projects partially over a guide plate (60) following the ramp (58) in the direction of flow.

3. An infeed plate according to clams 1 and 2.

4. An infeed plate according to one or more of the preceding claims, characterized in that the ramp (58) curves.

5. An infeed plate according to one or more of the preceding claims, characterized in that the ramp (58) is provided with or is attached to a convergent side plate (64).

6. An infeed plate according to claim 5, characterized in that an obliquely extending ramp (62) extends between the side plate (64) and the ramp (58).

7. An infeed plate according to claim 6, characterized in that the obliquely extending ramp (62) is of semi-cylindrical form.

8. An infeed plate according to one or more of the preceding claims, characterized in that the region (46) lying upstream is provided with a convergent side plate (56).

9. An axial separator with a rotor housing (38) and a rotor (39) rotatably mounted therein for separating harvested material in a combine harvester, characterized by an infeed plate according to one or more of claims 1 to 8 disposed in the intake region of the rotor (39).

10. An axial separator according to claim 9, characterized in that a feed drum (20) extending transversely relative to the flow direction is mounted ahead of the infeed plate.

## Revendications

1. Tôle d'entrée d'un séparateur axial constituée par une partie (46) disposée en amont dans la direction transversale et équipée d'une plaque (54), et par une partie (50) disposée en aval dans la direction transversale et comportant une rampe (58), la rampe (58) étant plus inclinée que la plaque (54), caractérisée en ce que dans la partie (46) disposée en amont, un tronçon conique (52), dont l'inclinaison est inférieure à celle de la rampe (58), se raccorde, dans la direction de circulation, à la plaque inclinée (54).

2. Tôle d'entrée d'un séparateur axial constituée par une partie (46) disposée en amont dans la direction transversale et équipée d'une plaque (54), et par une partie (50) disposée en aval dans la direction transversale et comportant une rampe (58), la rampe (58) étant plus inclinée que la plaque (54), caractérisée en ce que dans la partie (50) disposée en aval, la rampe (58) se termine par un bord (66), qui est disposé partiellement en saillie par rapport à une plaque de guidage (60), qui succède à la rampe (58) dans la direction de circulation.

3. Tôle d'entrée selon les revendications 1 et 2.

4. Tôle d'entrée selon une ou plusieurs des revendications précédentes, caractérisée en ce que la rampe (58) a une forme cintrée.

5. Tôle d'entrée selon une ou plusieurs des revendications précédentes, caractérisée en ce que la rampe (58) est pourvue d'une plaque latérale convergente (64) ou se raccorde à cette dernière.

6. Tôle d'entrée selon la revendication 5, caractérisée en ce qu'une rampe oblique (62) s'étend entre la plaque latérale (64) et la rampe (58).

7. Tôle d'entrée selon la revendication 6, caractérisée en ce que la rampe oblique (62) est agencée avec une forme semi-cylindrique.

8. Tôle d'entrée selon une ou plusieurs des revendications précédentes, caractérisée en ce que la partie (46) située en amont comporte une plaque latérale convergente (56).

9. Séparateur axial comportant un carter de rotor (38) et un rotor (39) monté de manière à pouvoir tourner dans ce carter et servant à séparer la matière récoltée dans une moissonneuse-batteuse, caractérisé par une tôle d'entrée, qui est disposée dans la zone d'entrée du rotor (39), selon une ou plusieurs des revendications 1 à 8.

10. Séparateur axial selon la revendication 9, caractérisé en ce qu'un tambour d'entraînement (20), qui s'étend transversalement par rapport à la direction de circulation, est monté en avant de la tôle d'entrée.
